(19) Europäisches Patentamt
European Patent Office
Office européen des brevets

(11) **EP 3 343 967 B1**

(12) **FASCICULE DE BREVET EUROPEEN**

(45) Date de publication et mention
de la délivrance du brevet:
**02.08.2023 Bulletin 2023/31**

(21) Numéro de dépôt: **17210950.6**

(22) Date de dépôt: **28.12.2017**

(51) Classification Internationale des Brevets (IPC):
***H04W 12/041*** *(2021.01)* *H04W 4/00* *(2018.01)*
*H04W 84/12* *(2009.01)*

(52) Classification Coopérative des Brevets (CPC):
**H04W 12/041;** H04W 4/70; H04W 84/12

(54) **PROCÉDÉS MIS EN OEUVRE PAR UN DISPOSITIF ET DANS UN RÉSEAU, ENTITÉ ÉLECTRONIQUE ASSOCIÉE**

VERFAHREN, DIE MITHILFE EINER VORRICHTUNG UND IN EINEM NETZ UMGESETZT WERDEN, UND ENTSPRECHENDE ELEKTRONIKEINHEIT

METHODS PERFORMED BY A DEVICE IN A NETWORK, AND ASSOCIATED ELECTRONIC ENTITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2016 FR 1663575**

(43) Date de publication de la demande:
**04.07.2018 Bulletin 2018/27**

(73) Titulaire: **IDEMIA France
92400 Courbevoie (FR)**

(72) Inventeur: **DOTTAX, Emmanuelle
92700 Colombes (FR)**

(74) Mandataire: **Idemia
2, place Samuel de Champlain
92400 Courbevoie (FR)**

(56) Documents cités:
• Robert Miller: "MWR Labs Whitepaper Building a Secure LoRa Solution", , 22 mars 2016 (2016-03-22), XP055406415, Extrait de l'Internet: URL:https://labs.mwrinfosecurity.com/asset s/BlogFiles/mwri-LoRa-security-guide-1.2-2 016-03-22.pdf [extrait le 2017-09-13]
• Beanow: "Crypto: updating AppKey suggestion - Network and Routing - The Things Network", , 31 octobre 2015 (2015-10-31), XP055407431, Extrait de l'Internet: URL:https://www.thethingsnetwork.org/forum /t/crypto-updating-appkey-suggestion/95[extrait le 2017-09-18]
• In No "thorsten Kramp;Nicolas Sornin" ET AL: "2015 LoRa(TM) Alliance", SPECIAL OR 25 EXEMPLARY, INCIDENTAL, PUNITIVE OR CONSEQUENTIAL DAMAGES OF ANY KIND, IN CONTRACT OR 26 IN TORT, IN CONNECTION WITH THIS DOCUMENT OR THE INFORMATION CONTAINED HEREIN, EVEN IF, 11 mai 2016 (2016-05-11), XP055326484, Extrait de l'Internet: URL:https://www.lora-alliance.org/portals/ 0/specs/LoRaWAN Specification1R0.pdf [extrait le 2016-12-06]
• Arsene Betolaud: "IoT security", , 30 juin 2016 (2016-06-30), XP055351468, Extrait de l'Internet: URL:www.captronic.fr/docrestreint.api/3992 /3806f7ca6e6fde730fa6a06ffdad366e0f0392e5/ pdf/Gemalto_-_22-06-2016.pdf [extrait le 2017-03-03]

**Description**

DOMAINE TECHNIQUE AUQUEL SE RAPPORTE L'INVENTION

La présente invention concerne les procédés mis en oeuvre par des dispositifs pour rejoindre un réseau.

Elle concerne plus particulièrement des procédés mis en oeuvre par un dispositif et dans un réseau, ainsi qu'une entité électronique associée.

L'invention s'applique particulièrement avantageusement en vue de produire des clés (telles que des clés de session) utilisables par la suite pour échanger de manière sécurisée des données dans le réseau.

ARRIERE-PLAN TECHNOLOGIQUE

Il est connu (par exemple dans la technologie LoRaWAN®) qu'un dispositif électronique puisse rejoindre un réseau afin de pouvoir ultérieurement échanger des données avec un serveur applicatif connecté à ce réseau.

Après une phase permettant au dispositif électronique de rejoindre le réseau, le dispositif électronique et le serveur applicatif sont en mesure de produire (chacun de leur côté) une clé de session utilisée par la suite notamment pour chiffrer les échanges de données entre ces deux entités.

On prévoit pour ce faire que le dispositif électronique et le serveur applicatif connaissent tous deux un secret partagé, par exemple la clé cryptographique applicative AppKey (pour "*Application Key*") dans la technologie LoRaWAN®.

Lorsque le processus permettant au dispositif électronique de rejoindre le réseau est géré par un serveur de réseau distinct du serveur applicatif, ce processus ne peut aboutir que si le serveur applicatif (qui détient le secret partagé) est disponible, sauf à communiquer le secret partagé au serveur de réseau (ce qui n'est généralement pas souhaitable).

OBJET DE L'INVENTION

Dans ce contexte, la présente invention propose un procédé selon la revendication 1 mis en oeuvre par un dispositif pour rejoindre un réseau, le dispositif comprenant une mémoire et mémorisant une clé cryptographique applicative dans ladite mémoire, le procédé comprenant les étapes suivantes :

- test de l'absence ou de la présence dans la mémoire d'une clé cryptographique associée au réseau ;
- en cas d'absence de la clé cryptographique associée au réseau, émission d'une requête pour rejoindre le réseau et réception en retour de données de dérivation produites par un serveur applicatif et chiffrées au moyen de la clé cryptographique applicative ;
- en cas de présence de la clé cryptographique associée au réseau, émission d'une requête pour rejoindre le réseau et réception en retour de données de dérivation produites par un serveur associé au réseau et chiffrées au moyen d'une clé cryptographique de réseau égale à, ou dérivée de, la clé cryptographique associée au réseau.

Le dispositif s'adapte ainsi en fonction des données mémorisées dans la mémoire susmentionnée : le processus lui permettant de rejoindre le réseau peut à défaut être mis en oeuvre au moyen de la clé cryptographique applicative ; par contre, si une clé cryptographique associée au réseau est présente, le processus lui permettant de rejoindre le réseau utilise une autre clé cryptographique et peut ainsi aboutir sans nécessiter un accès au serveur applicatif, comme expliqué dans la suite.

Le procédé peut comprendre une étape de dérivation d'une clé de session applicative sur la base de la clé cryptographique applicative et des données de dérivation reçues ; cette clé de session applicative pourra être utilisée ultérieurement dans le cadre d'échanges entre le dispositif et le serveur applicatif, par exemple pour chiffrer les données échangées.

En cas de présence de la clé cryptographique associée au réseau, le procédé peut par ailleurs comprendre une étape de dérivation d'une clé de session de réseau sur la base de la clé cryptographique de réseau et des données de dérivation reçues ; cette clé de session de réseau pourra être utilisée ultérieurement dans le cadre d'échanges entre le dispositif et le serveur de réseau, par exemple pour chiffrer les données échangées.

Le procédé peut par ailleurs comprendre, en cas de présence de la clé cryptographique associée au réseau, une étape de dérivation de la clé cryptographique de réseau sur la base de la clé cryptographique associée au réseau (qui peut alors être une clé maîtresse, comme expliqué dans la suite) et d'un identifiant du réseau.

On peut prévoir en outre dans ce cas une étape (préalable à l'étape de dérivation de la clé cryptographique de réseau) de réception de l'identifiant du réseau en provenance du serveur associé au réseau.

Selon une autre possibilité de réalisation, la clé cryptographique de réseau peut être la clé cryptographique associée au réseau (auquel cas cette clé est mémorisée au préalable, par exemple pendant une phase de personnalisation du dispositif, dans la mémoire susmentionnée).

On peut prévoir en pratique que le dispositif comprenne une entité électronique sécurisée incluant ladite mémoire.

L'invention propose également un procédé selon la revendication 7 mis en oeuvre dans un réseau comprenant un serveur applicatif, un serveur de réseau et un dispositif comprenant une mémoire mémorisant une clé cryptographique applicative, le procédé comprenant les étapes suivantes :

- test par le dispositif de l'absence ou de la présence dans la mémoire d'une clé cryptographique associée au réseau ;
- en cas d'absence de la clé cryptographique associée au réseau, émission par le dispositif d'une requête pour rejoindre le réseau, production de données de dérivation par le serveur applicatif, chiffrement des données de dérivation par le serveur applicatif au moyen de la clé cryptographique applicative, et réception par le dispositif des données de dérivation chiffrées ;
- en cas de présence de la clé cryptographique associée au réseau, émission par le dispositif d'une requête pour rejoindre le réseau, production de données de dérivation par le serveur de réseau, chiffrement des données de dérivation par le serveur de réseau au moyen d'une clé cryptographique de réseau égale à, ou dérivée de, la clé cryptographique associée au réseau, et réception par le dispositif des données de dérivation chiffrées.

L'invention propose enfin une entité électronique (par exemple une entité électronique sécurisée) selon la revendication 8 comprenant une mémoire mémorisant une clé cryptographique applicative, un module d'émission d'une requête pour rejoindre un réseau, un mécanisme de test de l'absence ou de la présence dans la mémoire d'une clé cryptographique associée au réseau, et un module de réception conçu pour recevoir, en cas d'absence de la clé cryptographique associée au réseau, des données de dérivation produites par un serveur applicatif et chiffrées au moyen de la clé cryptographique applicative et, en cas de présence de la clé cryptographique associée au réseau, des données de dérivation produites par un serveur associé au réseau et chiffrées au moyen d'une clé cryptographique de réseau égale à, ou dérivée de, la clé cryptographique associée au réseau.

Une telle entité électronique peut également comprendre un module de dérivation d'une clé de session applicative sur la base de la clé cryptographique applicative et des données de dérivation reçues.

L'entité électronique peut par ailleurs comprendre un module apte à dériver, en cas de présence de la clé cryptographique associée au réseau, une clé de session de réseau sur la base de la clé cryptographique de réseau et des données de dérivation reçues.

L'entité électronique peut aussi comprendre un module apte à dériver, en cas de présence de la clé cryptographique associée au réseau, la clé cryptographique de réseau sur la base de la clé cryptographique associée au réseau et d'un identifiant du réseau.

Lorsque l'entité électronique comprend un processeur (par exemple un microprocesseur), le mécanisme et/ou les modules précités peuvent au moins en partie être mis en oeuvre par des instructions exécutables par le processeur et mémorisées dans une mémoire de l'entité électronique.

## DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement les éléments principaux d'un système dans lequel peut être mise en oeuvre l'invention ;
- la figure 2 présente les données initialement mémorisées dans divers dispositifs du système de la figure 1 ;
- la figure 3 représente une première possibilité envisageable pour les étapes d'initiation d'un procédé conforme à l'invention ;
- la figure 4 représente une seconde possibilité envisageable pour les étapes d'initiation d'un procédé conforme à l'invention ;
- la figure 5 représente des étapes d'un procédé mis en oeuvre dans un premier cas ; et
- la figure 6 représente des étapes d'un procédé mis en oeuvre dans un second cas.

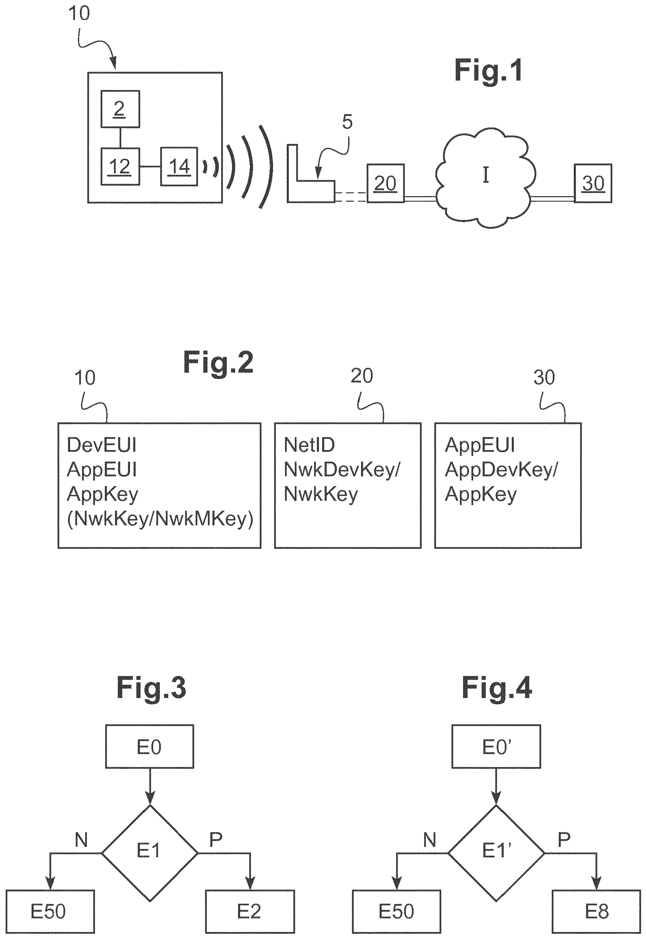

La figure 1 représente schématiquement les éléments principaux d'un système dans lequel peut être mise en oeuvre l'invention.

Ce système comprend un dispositif électronique 10, une passerelle 5 (ou "*gateway*" selon l'appellation anglo-saxonne), un serveur de réseau 20 et un serveur applicatif 30.

Le dispositif électronique 10 comprend un processeur 12 (par exemple un microcontrôleur), une entité électronique 2 et un circuit de communication 14, ici un circuit de communication conçu pour établir une liaison sans fil (*i.e.* par ondes radio) avec la passerelle 5.

Le dispositif électronique 10 est typiquement un objet connecté, tel qu'un dispositif de mesure (par exemple un dispositif de mesure de fourniture d'énergie ou d'eau), un détecteur (tel qu'un détecteur de fumée), un identifiant, ou un terminal monétique.

Dans l'exemple décrit, l'entité électronique 2 est une entité électronique sécurisée, en l'occurrence un élément sécurisé (ou SE pour "*Secure Element*"), réalisé ici sous la forme d'un microcontrôleur. Un tel élément sécurisé peut éventuellement être intégré au dispositif électronique 10, par exemple en étant soudé au sein du dispositif électronique 10 : l'entité électronique 2 est alors de type eSE (pour "*embedded Secure Element*").

En variante, l'entité électronique 2 pourrait être une carte à microcircuit (par exemple une carte à microcircuit universelle ou UICC pour "*Universal Integrated Circuit Card*"*,* telle que visée dans la spécification technique ETSI TS 102 221), ou une carte à microcircuit universelle soudée ou eUICC pour "*embedded Universal Circuit Card*" (telle que décrite dans la norme ETSI TS 103 383).

L'entité électronique 2 comprend un processeur (par exemple un microprocesseur) et au moins une mémoire, notamment ici une mémoire nonvolatile réinscriptible. Cette mémoire mémorise en particulier des instructions conçues de telle sorte que l'entité électronique 2 puisse mettre en oeuvre certaines étapes au moins des procédés décrits ci-dessous en références aux figures 3 à 6 lorsque ces instructions sont exécutées par le processeur de l'entité électronique 2.

La mémoire de l'entité électronique 2 mémorise également des données utilisées au cours de son fonctionnement, en particulier certaines au moins des données indiquées en figure 2 (décrite ci-dessous) comme mémorisées au sein du dispositif électronique 10.

Comme déjà indiqué, l'entité électronique 2 est ici sécurisée, c'est-à-dire que cette entité électronique 2 est conçue, du fait de sa construction physique et de la conception des programmes d'ordinateur qu'elle mémorise, de façon à rendre très difficile, voire impossible, pour un attaquant l'accès (par lecture et/ou modification) aux données confidentielles qu'elle mémorise. Ainsi, l'entité électronique 2 présente un niveau de sécurité conforme aux critères communs EAL (pour "*Evaluation Assurance Level*"), correspondant à la norme ISO 15408, avec un niveau supérieur ou égal à 4, ou à la norme FIPS (pour "*Federal Information Processing Standard*") 140-2.

Comme déjà indiqué, le dispositif électronique 10 peut établir une liaison (ici sans fil) avec la passerelle 5, laquelle est reliée au serveur de réseau 20 (par exemple au moyen d'un réseau local tel qu'un réseau Ethernet ou un réseau local sans fil, parfois dénommé WLAN pour "*Wireless Local Area Network*") de sorte que le dispositif électronique 10 peut échanger des données avec le serveur de réseau 20.

Le dispositif électronique 10, la passerelle 5 et le serveur de réseau 20 sont par exemple agencés selon la technologie LoRaWAN®.

Le serveur de réseau 20 est également connecté à un réseau de communication, ici un réseau de communication public I tel que le réseau Internet, auquel est également connecté un serveur applicatif 30.

Le serveur applicatif 30 et le dispositif électronique 10 doivent pouvoir échanger des données de manière sécurisée dans le cadre du fonctionnement du dispositif électronique 10, typiquement dans le cadre de l'exécution d'une application par le processeur 12 du dispositif électronique 10.

Comme cela ressort de ce qui précède, le dispositif électronique 10 et le serveur applicatif 30 peuvent échanger des données via la passerelle 5, le serveur de réseau 20 et le réseau de communication I.

On décrit dans la suite la phase (généralement mise en oeuvre lors de la première connexion du dispositif électronique 10 au serveur de réseau 20) qui permet au dispositif électronique 10 de rejoindre le réseau comprenant le serveur de réseau 20 et de mettre en place des clés cryptographiques (dénommées clés de session dans la suite) utilisées lors des échanges de données entre le dispositif électronique 10 et le serveur de réseau 20, ainsi qu'entre le dispositif électronique 10 et le serveur applicatif 30, en particulier pour chiffrer les données échangées.

La figure 2 présente ainsi les données initialement mémorisées dans le dispositif électronique 10, le serveur de réseau 20 et le serveur applicatif 30, avant cette phase permettant au dispositif électronique 10 de rejoindre le réseau.

Le dispositif électronique 10 mémorise ainsi :

- un identifiant DevEUI du dispositif électronique 10 ;
- un identifiant AppEUI de l'application concernée ;
- une clé cryptographique applicative AppKey ; et
- éventuellement une clé cryptographique associée au réseau, qui peut être soit une clé maîtresse NwkMKey, soit une clé cryptographique de réseau NwkKey.

Comme déjà indiqué, certaines au moins de ces données (en particulier les clés cryptographiques susmentionnées) peuvent être mémorisées au sein de l'entité électronique sécurisée 2 qui équipe le dispositif électronique 10 comme déjà indiqué (ce qui permet d'empêcher tout accès à ces données par une personne malintentionnée).

Les données (telles que les clés cryptographiques susmentionnées) mémorisées dans l'entité électronique sécurisée 2 ont par exemple été mémorisées dans une mémoire de l'entité électronique sécurisé 2 au cours d'une étape de préparation de l'entité électronique 2 en vue de son fonctionnement ultérieur (étape couramment dénommée "*étape de personnalisation*").

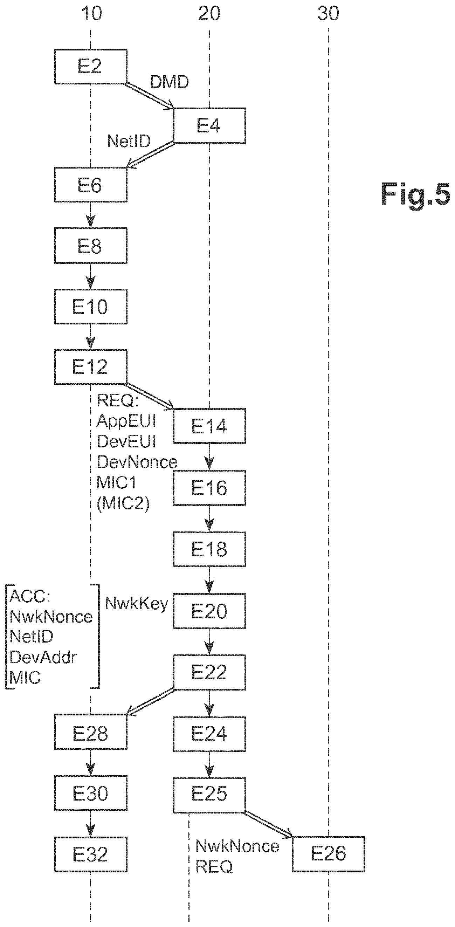

Comme cela ressortira des explications données ci-dessous, notamment en référence aux figures 3 et 4, le dispositif électronique 10 (et plus précisément ici l'entité électronique 2) mémorise l'une des clés cryptographiques associées au réseau lorsque l'on souhaite que le procédé mis en oeuvre par le dispositif électronique 10 pour rejoindre le réseau soit conforme au procédé décrit ci-dessous en référence à la figure 5.

Le serveur de réseau 20 mémorise quant à lui un identifiant de réseau NetID et, éventuellement (lorsque l'on souhaite que le procédé mis en oeuvre par le dispositif électronique 10 pour rejoindre le réseau puisse être conforme au procédé décrit ci-dessous en référence à la figure 5), une clé cryptographique fournie au réseau, qui peut être soit la clé cryptographique de réseau NwkKey susmentionnée, soit une clé générique de réseau NwkDevKey.

On prévoit ici en effet que la clé générique de réseau NwkDevKey est une clé dérivée sur la base de la clé maîtresse NwkMKey susmentionnée (qui n'est quant à elle pas distribuée au réseau par mesure de confidentialité) et de l'identifiant de réseau NetID : NwkDevKey = d1 (NwkMKey, NetID), où d1 est une fonction de dérivation.

La clé cryptographique de réseau NwkKey est quant à elle dérivée sur la base de la clé générique de réseau NwkDevKey et de l'identifiant DevEUI du dispositif électronique 10 : NwkKey = d2(NwkDevKey, DevEUI), où d2 est une fonction de dérivation. La clé cryptographique de réseau NwkKey est donc liée à un couple dispositif électronique 10 - réseau.

Selon les modes de réalisation, lorsque l'on souhaite que le procédé mis en oeuvre par le dispositif électronique 10 pour rejoindre le réseau puisse être conforme au procédé décrit ci-dessous en référence à la figure 5, le serveur de réseau 20 peut ainsi mémoriser soit la clé générique de réseau NwkDevKey (et dériver ensuite la clé cryptographique de réseau NwkKey sur la base de l'identifiant DevEUI), soit une clé cryptographique de réseau NwkKey pour chaque dispositif électronique avec lequel le serveur de réseau 20 est susceptible d'interagir.

Le serveur applicatif 30 mémorise l'identifiant AppEUI de l'application et la clé cryptographique applicative AppKey (laquelle est associée au dispositif électronique 10 et à lui seul).

En variante, le serveur applicatif 30 pourrait mémoriser une clé applicative générique AppDevKey (en lieu et place de la clé cryptographique applicative AppKey) afin de pouvoir dériver la clé cryptographique applicative AppKey sur la base de la clé applicative générique AppDevKey et de l'identifiant DevEUI du dispositif électronique 10 : AppKey = d3(AppDevKey, DevEUI) où d3 est une fonction de dérivation.

On prévoit ici que la clé applicative générique AppDevKey et la clé maîtresse NwkMKey soit dérivée à partir d'une même clé racine AppRootKey (connue seulement de l'organisme gérant l'application concerné). Ceci peut simplifier la gestion des clés au sein de cet organisme.

La figure 3 représente une première possibilité envisageable pour les étapes d'initiation d'un procédé mis en oeuvre par le dispositif électronique 10 pour rejoindre le réseau.

On se place ici dans le cas où la clé cryptographique associée au réseau éventuellement mémorisée au sein du dispositif électronique 10 (ici dans la mémoire de l'entité électronique 2) est la clé maîtresse NwkMKey.

Le procédé de la figure 3 débute par une étape E0 à laquelle le dispositif électronique 10 consulte la mémoire concernée (ici la mémoire de l'entité électronique 2) afin de déterminer (étape E1) si cette mémoire contient (*i.e.* mémorise) une clé cryptographique associée au réseau, ici la clé maîtresse NwkMKey. Cette étape peut être réalisée en pratique par exemple en consultant un indicateur dédié mémorisé dans la mémoire concernée. En variante, cette étape peut être réalisée en recherchant dans la mémoire concernée un champ identifié par un en-tête spécifique.

Dans l'affirmative, le procédé se poursuit à partir de l'étape E2 décrite plus bas en référence à la figure 5.

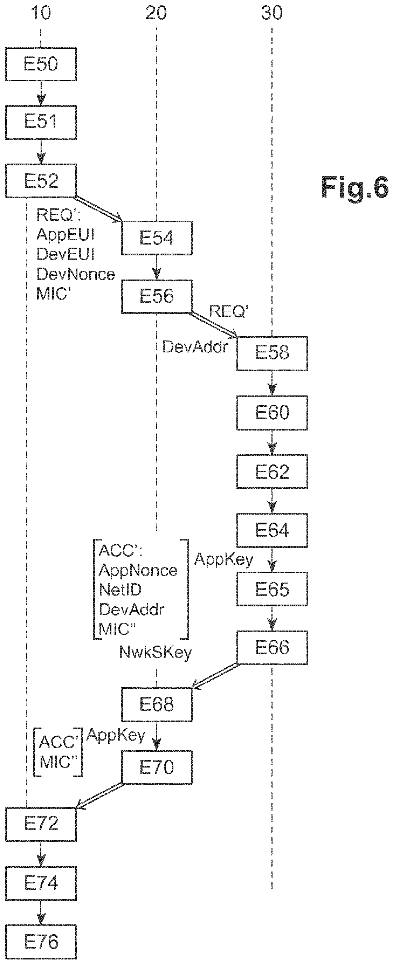

Dans la négative, le procédé se poursuit à partir de l'étape E50 décrite plus bas en référence à la figure 6.

La figure 4 représente une seconde possibilité envisageable pour les étapes d'initiation d'un procédé mis en oeuvre par le dispositif électronique 10 pour rejoindre le réseau.

On se place ici dans le cas où la clé cryptographique associée au réseau éventuellement mémorisée au sein du dispositif électronique 10 (ici dans la mémoire de l'entité électronique 2) est la clé cryptographique de réseau NwkKey.

Le procédé de la figure 4 débute par une étape E0' à laquelle le dispositif électronique 10 consulte la mémoire concernée (ici la mémoire de l'entité électronique 2) afin de déterminer (étape E1') si cette mémoire contient (i.e. mémorise) une clé cryptographique associée au réseau, ici la clé cryptographique de réseau NwkKey. Cette étape peut être réalisée en pratique par exemple en consultant un indicateur dédié mémorisé dans la mémoire concernée. En variante, cette étape peut être réalisée en recherchant dans la mémoire concernée un champ identifié par un en-tête spécifique.

Dans l'affirmative, le procédé se poursuit à partir de l'étape E8 décrite plus bas en référence à la figure 5.

Dans la négative, le procédé se poursuit à partir de l'étape E50 décrite plus bas en référence à la figure 6.

La figure 5 représente les étapes mises en oeuvre dans le cas où une clé cryptographique associée au réseau (en pratique ici le clé maîtresse NwkMKey ou la clé cryptographique de réseau NwkKey) est présente dans la mémoire concernée au sein du dispositif électronique 10 (ici la mémoire de l'entité électronique 2). Comme cela ressort des explications données ci-dessus en référence aux figures 3 et 4, le procédé décrit ci-dessous débute à l'étape E2 si la clé maîtresse NwkMKey est présente dans la mémoire du dispositif électronique 10 et à l'étape E8 si la clé cryptographique de réseau NwkKey est présente dans la mémoire du dispositif électronique 10.

À l'étape E2, l'entité électronique 2 équipant le dispositif électronique 10 émet une demande d'identifiant DMD à destination du serveur de réseau 20 (via la passerelle 5 et au moyen du circuit de communication 14).

Le serveur de réseau 20 reçoit cette demande d'identifiant DMD et émet en réponse son identifiant de réseau NetID (étape E4).

L'entité électronique 2 reçoit l'identifiant NetID et peut ainsi déterminer à l'étape E6 la clé cryptographique de réseau NwkKey sur la base de la clé maîtresse NwkMKey et de l'identifiant de réseau NetID.

Précisément, comme expliqué plus haut, l'entité électronique 2 détermine tout d'abord (ici par dérivation) la clé générique de réseau NwkDevKey sur la base de la clé maîtresse NwkMKey et de l'identifiant de réseau NetID :

$$NwkDevKey = d1(NwkMKey, NetID).$$

L'entité électronique 2 peut alors déterminer la clé cryptographique de réseau NwkKey (ici par dérivation) sur la base de la clé générique de réseau NwkDevKey et de l'identifiant du dispositif électronique DevEUI :

$$NwkKey = d2(NwkDevKey, DevEUI).$$

L'entité électronique 2 procède à l'étape E8 à la détermination de premières données de dérivation DevNonce, ici par tirage aléatoire.

L'entité électronique 2 prépare ensuite à l'étape E10 un message REQ comprenant l'identifiant AppEUI de l'application, l'identifiant DevEUI du dispositif électronique 10 et les premières données de dérivation DevNonce. Ce message REQ forme une requête pour rejoindre le réseau et peut également inclure un en-tête spécifique correspondant.

L'entité électronique 2 détermine par ailleurs à l'étape E10 une valeur d'intégrité MIC1 du message REQ ainsi préparé, par exemple en appliquant au message préparé une fonction cryptographique (ici de type CMAC) utilisant la clé cryptographique de réseau NwkKey.

On remarque qu'on utilise dans l'exemple décrit ici la même clé cryptographique NwkKey pour le calcul de la valeur d'intégrité MIC1 et pour le chiffrement des données incluant les secondes données de dérivation NwkNonce (ci-dessous à l'étape E20). On pourrait toutefois en variante utiliser deux clés distinctes : une clé spécifique pour le calcul de la valeur d'intégrité MIC1 (utilisée à l'étape E10 qui vient d'être décrite et à l'étape de vérification E14 ci-dessous) et une clé spécifique pour le chiffrement (utilisée à l'étape E20 pour le chiffrement et à l'étape E28 pour le déchiffrement). Ces deux clés distinctes et spécifiques pourraient en pratique être dérivées sur la base d'une même clé racine (et de données de dérivation respectives différentes).

L'entité électronique 2 peut également déterminer lors de cette étape E10 une valeur d'intégrité MIC2 du message préparé REQ, par exemple en appliquant au message préparé une fonction cryptographique (ici de type CMAC) utilisant la clé cryptographique applicative AppKey.

De même, on utilise ici la même clé cryptographique pour le calcul de la valeur d'intégrité MIC2 et pour la dérivation de la clé de session applicative (voir ci-dessous les étapes E26 et E32). On pourrait toutefois en variante utiliser une clé spécifique (différente de la clé cryptographique applicative AppKey) pour le calcul de la valeur d'intégrité MIC2.

Le dispositif électronique 10 peut alors émettre à l'étape E12 le message REQ préparé à l'étape E10 (message de requête pour rejoindre le réseau) et la (ou les) valeur(s) d'intégrité MIC1, MIC2, à destination du serveur de réseau 20.

Le serveur de réseau 20 reçoit ces données et procède à des vérifications à l'étape E14.

Le serveur de réseau 20 peut ainsi vérifier que les premières données de dérivation DevNonce n'ont pas été préalablement reçues en provenance de ce dispositif électronique 10 (*i.e.* avec l'identifiant DevEUI également reçu). Le serveur de réseau 20 peut mémoriser pour se faire l'ensemble des données de dérivation reçues lors de précédents échanges.

Si les premières données de dérivation DevNonce ont déjà été reçues, il est mis fin au procédé afin d'éviter tout risque d'attaque par rejeu.

Si les premières données de dérivation DevNonce n'ont jamais été reçues au préalable, le procédé se poursuit par la vérification de la valeur d'intégrité MIC1 : le serveur de réseau 20 applique au message reçu REQ

(comprenant l'identifiant AppEUI de l'application, l'identifiant DevEUI du dispositif électronique 10 et les premières données de dérivation DevNonce) la fonction cryptographique utilisant la clé cryptographique de réseau NwkKey et vérifie que le résultat obtenu est bien égal à la valeur d'intégrité MIC1 reçue.

Dans la négative, il est mis fin au procédé sans que le dispositif électronique 10 n'ait pu rejoindre le réseau.

Dans l'affirmative, le procédé se poursuit à l'étape E16.

On remarque que, dans le cas où le serveur de réseau 20 mémorise la clé générique de réseau NwkDevKey, il peut obtenir la clé cryptographique de réseau NwkKey par dérivation sur la base de cette clé générique de réseau NwkDevKey et de l'identifiant DevEUI du dispositif électronique 10 (qu'il vient de recevoir). Comme déjà indiqué, on a en effet :

$$NwkKey = d2(NwkDevKey, DevEUI).$$

Le serveur de réseau 20 produit ensuite, ici par tirage aléatoire, des secondes données de dérivation NwkNonce (étape E16).

Le serveur de réseau 20 peut également générer à cette étape une adresse DevAddr du dispositif électronique 10 dans le réseau.

Le serveur de réseau 20 peut ainsi préparer à l'étape E18 un message ACC d'acceptation du dispositif électronique 10 dans le réseau, ce message ACC comprenant les secondes données de dérivation NwkNonce ainsi qu'éventuellement l'identifiant de réseau NetID et/ou l'adresse DevAddr et/ou un en-tête spécifique.

Le serveur de réseau 20 détermine par ailleurs à l'étape E18 une valeur d'intégrité MIC du message d'acceptation ACC ainsi préparé, par exemple en appliquant au message préparé une fonction cryptographique (ici de type CMAC) utilisant la clé cryptographique de réseau NwkKey. Comme déjà indiqué plus haut, on pourrait utiliser en variante une clé spécifique pour le calcul des valeurs d'intégrité, distincte de la clé cryptographique de réseau utilisée ci-dessous pour le chiffrement (étape E20).

Le serveur de réseau 20 procède alors à l'étape E20 au chiffrement du message d'acceptation ACC (comprenant les secondes données de dérivation NwkNonce, l'identifiant de réseau NetID et l'adresse DevAddr) préparé à l'étape E18, ici par exemple au moyen d'un algorithme cryptographique de chiffrement utilisant la clé cryptographique de réseau NwkKey. Ce chiffrement peut également couvrir la valeur d'intégrité MIC susmentionnée.

Le serveur de réseau 20 peut ainsi émettre à l'étape E22 ce message chiffré à destination du dispositif électronique 10 (et précisément de l'entité électronique 2 qui équipe ce dispositif électronique 10). Le traitement effectué alors au sein du dispositif électronique 10 est décrit plus bas (à partir de l'étape E28).

Le serveur de réseau 20 détermine par ailleurs à l'étape E24 une clé de session de réseau NwkSKey sur la base de la clé cryptographique de réseau NwkKey, des premières données de dérivation DevNonce et des secondes données de dérivation NwkNonce.

On applique par exemple pour ce faire un algorithme cryptographique de dérivation F (éventuellement de type CMAC), utilisant la clé cryptographique de réseau NwkKey, à des données comprenant les premières données de dérivation DevNonce et les secondes données de dérivation NwkNonce (ainsi qu'éventuellement d'autres données telles que l'identifiant de réseau NetID) :

$$NwkSKey = F_{NwkKey}(NwkNonce||NetID||DevNonce),$$

où $\|$ est l'opérateur de concaténation.

Comme déjà indiqué, la clé de session de réseau NwkSKey pourra ultérieurement être utilisée dans le cadre d'échange de données entre le dispositif électronique 10 et le serveur de réseau 20, par exemple notamment pour le chiffrement des données échangées.

Le serveur de réseau 20 peut ensuite transmettre à destination du serveur applicatif 30 le message REQ initialement émis par le dispositif électronique 10 à l'étape E12 (comprenant notamment l'identifiant DevEUI du dispositif électronique 10 et les premières données de dérivation DevNonce) et les secondes données de dérivation NwkNonce (étape E25).

On remarque que cette transmission peut être reportée si le serveur applicatif 30 n'est pas disponible, sans que cela ne bloque le processus permettant au dispositif électronique 10 de rejoindre le réseau (ce processus se poursuivant de toute façon comme déjà indiqué à l'étape E28).

Lorsque le serveur applicatif 30 reçoit les données émises à l'étape E25, il peut vérifier la valeur d'intégrité MIC2 (dans les cas où la valeur d'intégrité MIC2 est utilisée), ici au moyen de la clé cryptographique applicative AppKey (ou en variante au moyen d'une clé spécifique).

En cas de vérification positive, le serveur applicatif 30 peut déterminer à l'étape E26 une clé de session applicative AppSKey sur la base de la clé cryptographique applicative AppKey, des premières données de dérivation DevNonce et des secondes données de dérivation NwkNonce. (En cas de vérification négative, il est mis fin au procédé sans générer la clé de session applicative AppSKey.)

Dans le cas où le serveur applicatif 30 mémorise la clé applicative générique AppDevKey, il peut obtenir la clé cryptographique applicative AppKey par dérivation sur la base de la clé applicative générique AppDevKey et de l'identifiant DevEUI (que ce serveur applicatif 30 vient de recevoir) :

$$AppKey = d3(AppDevKey, DevEUI).$$

La clé de session applicative AppSKey est par exemple déterminée par application d'un algorithme cryptographique de dérivation G (éventuellement de type CMAC), utilisant la clé cryptographique applicative AppKey, à des données comprenant les premières données de dérivation DevNonce et les secondes données de dérivation NwkNonce (ainsi qu'éventuellement d'autres données telles que l'identifiant de réseau NetID) :

$$AppSKey = G_{AppKey}(NwkNonce\|NetID\|DevNonce),$$

où $\|$ est l'opérateur de concaténation.

Comme déjà indiqué, la clé de session applicative AppSKey pourra ultérieurement être utilisée dans le cadre d'échange de données entre le dispositif électronique 10 et le serveur applicatif 30, par exemple notamment pour le chiffrement des données échangées.

De son côté, l'équipement électronique 10 (et précisément l'entité électronique 2) reçoit le message chiffré émis par le serveur de réseau 20 à l'étape E22 (message d'acceptation ACC dans le réseau, chiffré au moyen de la clé cryptographique de réseau NwkKey).

L'entité électronique 2 peut alors déchiffrer ce message à l'aide de la clé cryptographique de réseau NwkKey et vérifier la valeur d'intégrité MIC (étape E28).

Précisément, l'entité électronique 2 applique un algorithme cryptographique de déchiffrement utilisant la clé cryptographique de réseau NwkKey au message chiffré reçu et peut ainsi avoir accès aux secondes données de dérivation NwkNonce, à l'identifiant de réseau NetID et à l'adresse DevAddr

(ces données étant contenues dans le message déchiffré), ainsi qu'à la valeur d'intégrité MIC.

L'entité électronique 2 vérifie par ailleurs l'intégrité du message reçu en comparant la valeur d'intégrité reçu MIC et le résultat de l'application au message déchiffré de la fonction cryptographique ayant permis de déterminer la valeur d'intégrité MIC à l'étape E18 (et utilisant la clé cryptographique de réseau NwkKey).

L'entité électronique 2 (et/ou le processeur 12) peut alors mémoriser l'adresse DevAddr en tant qu'adresse du dispositif électronique 10 dans le réseau (étape E30).

L'entité électronique 2 détermine enfin à l'étape E32 les deux clés de session précitées :

- la clé de session applicative AppSKey à utiliser ultérieurement dans les échanges de données avec le serveur applicatif 30 (notamment en tant que clé d'un algorithme cryptographique de chiffrement appliqué aux données échangées);
- la clé de session de réseau NwkSKey à utiliser ultérieurement dans les échanges de données avec le serveur de réseau 20 (notamment en tant que clé d'un algorithme cryptographique de chiffrement appliqué aux données échangées).

On rappelle que la clé de session applicative AppSKey est ici déterminée par application d'un algorithme cryptographique de dérivation G, utilisant la clé cryptographique applicative AppKey, à des données comprenant les premières données de dérivation DevNonce (produites à l'étape E8), les secondes données de dérivation NwkNonce (reçues et déchiffrées à l'étape 28) et, ici, l'identifiant de réseau NetID.

De même, la clé de session de réseau NwkSKey est ici déterminée par application d'un algorithme cryptographique de dérivation F, utilisant la clé cryptographique de réseau NwkKey, à des données comprenant les premières données de dérivation DevNonce, les secondes données de dérivation NwkNonce et, ici, l'identifiant de réseau NetID.

Le procédé qui vient d'être décrit a ainsi permis au dispositif électronique 10 de rejoindre le réseau (et notamment de mémoriser son adresse DevAddr à l'étape E30) et de produire les clés de sessions AppSKey, NwkSKey susmentionnés. On remarque en particulier que la clé de session applicative AppSKey a pu être produite sans nécessiter un accès au serveur applicatif 30 (qui pourrait donc éventuellement être hors-ligne lorsque le dispositif électronique 10 rejoint le réseau) et sans que le serveur de réseau 20 ne puisse quant à lui obtenir cette clé de session applicative AppSKey (ce qui permet d'assurer la confidentialité des échanges ultérieurs entre le dispositif électronique 10 et le serveur applicatif 30 vis-à-vis du serveur de réseau 20).

On décrit à présent en référence à la figure 6 les étapes mises en oeuvre dans le cas où aucune clé cryptographique associée au réseau NwkMKey, NwkKey n'est présente dans la mémoire concernée au sein du dispositif électronique 10 (ici la mémoire de l'entité électronique 2).

À l'étape E50, l'entité électronique 2 procède à la détermination de premières données de dérivation DevNonce, ici par tirage aléatoire.

L'entité électronique 2 prépare ensuite à l'étape E51 un message REQ' comprenant l'identifiant AppEUI de l'application, l'identifiant DevEUI du dispositif électronique 10 et les premières données de dérivation DevNonce. Ce message REQ' forme une requête pour rejoindre le réseau et peut également inclure un en-tête spécifique correspondant.

L'entité électronique 2 détermine par ailleurs à l'étape E51 une valeur d'intégrité MIC' du message REQ ainsi préparé, par exemple en appliquant au message préparé une fonction cryptographique (ici de type CMAC) utilisant ici la clé cryptographique applicative AppKey.

On utilise effet ici la même clé cryptographique AppKey pour le calcul de la valeur d'intégrité MIC' et pour le chiffrement des données incluant les secondes données de dérivation AppNonce (ci-dessous à l'étape E64). On pourrait toutefois en variante utiliser deux clés distinctes : une clé spécifique pour le calcul de la valeur d'intégrité MIC' (utilisée à l'étape E51 qui vient d'être décrite et à l'étape de vérification E58 ci-dessous) et une clé spécifique pour le chiffrement (utilisée à l'étape E64 pour le chiffrement et à l'étape E72 pour le déchiffrement). Ces deux clés distinctes et spécifiques pourraient en pratique être dérivées sur la base d'une même clé racine (et de données de dérivation respectives différentes).

Le dispositif électronique 10 peut ensuite émettre à l'étape E52 le message REQ' préparé à l'étape E51 (message de requête pour rejoindre le réseau) et la valeur d'intégrité MIC' à destination du serveur de réseau 20.

Le serveur de réseau 20 reçoit ces données et vérifie à l'étape E54 que les premières données de dérivation DevNonce n'ont pas été préalablement reçues en provenance de ce dispositif électronique 10 (*i.e.* avec l'identifiant DevEUI également reçu). Le serveur de réseau 20 peut mémoriser pour se faire l'ensemble des données de dérivation reçues lors de précédents échanges.

Si les premières données de dérivation DevNonce ont déjà été reçues, il est mis fin au procédé afin d'éviter tout risque d'attaque par rejeu.

Si les premières données de dérivation DevNonce n'ont jamais été reçues au préalable, le procédé se poursuit par la transmission du message REQ', de la valeur d'intégrité MIC' et d'une adresse DevAddr à destination du serveur applicatif 30 (étape E56). Cette adresse DevAddr (générée par exemple à cette occasion) est allouée au dispositif électronique 10 et correspond ainsi à l'adresse du dispositif électronique 10 dans le réseau. L'adresse DevAddr est éventuellement transmise sous forme chiffrée (par exemple par établissement d'un canal de communication sécurisé entre le serveur de réseau 20 et le serveur applicatif 30).

Le serveur applicatif 30 reçoit l'adresse DevAddr, le message REQ' et la valeur d'intégrité MIC' et peut alors vérifier l'intégrité du message REQ' (étape E58) : le serveur applicatif 30 applique au message reçu REQ' (comprenant l'identifiant AppEUI de l'application, l'identifiant DevEUI du dispositif électronique 10 et les premières données de dérivation DevNonce) la fonction cryptographique utilisant ici la clé cryptographique applicative AppKey et vérifie que le résultat obtenu est bien égal à la valeur d'intégrité MIC' reçue.

En cas de vérification négative, il est mis fin au procédé sans que le dispositif électronique 10 n'ait pu rejoindre le réseau.

Dans l'affirmative, le procédé se poursuit à l'étape E60 où le serveur applicatif 30 produit, ici par tirage aléatoire, des secondes données de dérivation AppNonce.

Le serveur applicatif 30 peut ainsi préparer à l'étape E62 un message ACC' d'acceptation du dispositif électronique 10 dans le réseau, ce message ACC' comprenant les secondes données de dérivation AppNonce ainsi qu'éventuellement l'identifiant de réseau NetID et/ou l'adresse DevAddr et/ou un en-tête spécifique.

Le serveur applicatif 30 détermine par ailleurs à l'étape E62 une valeur d'intégrité MIC" du message d'acceptation ACC' ainsi préparé, par exemple en appliquant au message préparé ACC' une fonction cryptographique (ici de type CMAC) utilisant la clé cryptographique applicative AppKey (ou, en variante, une clé spécifique de calcul des valeurs d'intégrité différente de la clé cryptographique applicative AppKey, comme déjà indiqué).

Le serveur applicatif 30 procède ensuite à l'étape E64 au chiffrement du message d'acceptation ACC' (comprenant les secondes données de dérivation AppNonce, l'identifiant de réseau NetID et l'adresse DevAddr) préparé à l'étape E62, ici par exemple au moyen d'un algorithme cryptographique de chiffrement utilisant la clé cryptographique applicative AppKey. Ce chiffrement peut également couvrir la valeur d'intégrité MIC" susmentionnée.

Le serveur applicatif 30 détermine par ailleurs une clé de session de réseau NwkSKey et une clé de session applicative AppSKey (étape E65).

Ces clés de session NwkSKey, AppSkey sont chacune déterminées sur la base de la clé cryptographique applicative AppKey, des premières données de dérivation DevNonce et des secondes données de dérivation AppNonce (et, ici, de l'identifiant de réseau NetID).

On peut utiliser par exemple pour ce faire un algorithme cryptographique de dérivation H utilisant la clé cryptographique applicative AppKey et appliqué à des données légèrement différentes dans le cas de la clé de session applicative AppSKey et dans le cas de la clé de session de réseau NwkSKey :

$$NwkSKey = H_{AppKey}(0x01||AppNonce||NetID||DevNonce),$$

$$AppSKey = H_{AppKey}(0x02||AppNonce||NetID||DevNonce)$$

où 0x01 est la valeur 1 en hexadécimal, où 0x02 est la valeur 2 en hexadécimal et où II est l'opérateur de concaténation.

Comme déjà indiqué, la clé de session de réseau NwkSKey pourra ultérieurement être utilisée dans le cadre d'échange de données entre le dispositif électronique 10 et le serveur de réseau 20, par exemple notamment pour le chiffrement des données échangées ; la clé de session applicative AppSKey pourra quant à elle être ultérieurement utilisée dans le cadre d'échange de données entre le dispositif électronique 10 et le serveur applicatif 30, par exemple notamment pour le chiffrement des données échangées.

Le serveur applicatif 30 émet à l'étape E66 le message ACC' chiffré et la clé de session de réseau NwkSKey à destination du serveur de réseau 20. La clé de session de réseau NwkSKey est éventuellement transmise sous forme chiffrée (par exemple par établissement d'un canal de communication sécurisé entre le serveur de réseau 20 et le serveur applicatif 30).

Le serveur de réseau 20 reçoit la clé de session de réseau NwkSKey et mémorise cette clé de session de réseau NwkSKey à l'étape E68 pour utilisation ultérieure.

Le serveur de réseau 20 transmet par ailleurs à l'étape E70 le message ACC' chiffré à destination du dispositif électronique 10 (et précisément de l'entité électronique 2 qui équipe ce dispositif électronique 10).

L'équipement électronique 10 (et précisément l'entité électronique 2) reçoit le message chiffré émis par le serveur de réseau 20 à l'étape E70 (message d'acceptation ACC' dans le réseau, chiffré au moyen de la clé cryptographique applicative AppKey).

L'entité électronique 2 peut alors déchiffrer ce message à l'aide de la clé cryptographique applicative AppKey et vérifier la valeur d'intégrité MIC" (étape E72).

Précisément, l'entité électronique 2 applique un algorithme cryptographique de déchiffrement utilisant la clé cryptographique applicative AppKey au message chiffré reçu et peut ainsi avoir accès aux secondes données de dérivation AppNonce, à l'identifiant de réseau NetID et à l'adresse DevAddr (ces données étant contenues dans le message déchiffré), ainsi qu'à la valeur d'intégrité MIC".

L'entité électronique 2 vérifie par ailleurs l'intégrité du message reçu en comparant la valeur d'intégrité reçu MIC" et le résultat de l'application au message déchiffré de la fonction cryptographique ayant permis de déterminer la valeur d'intégrité MIC" à l'étape E62 (et utilisant ici la clé cryptographique applicative AppKey, ou, en variante, une clé spécifique).

L'entité électronique 2 (et/ou le processeur 12) peut alors mémoriser l'adresse DevAddr en tant qu'adresse du dispositif électronique 10 dans le réseau (étape E74).

L'entité électronique 2 détermine enfin à l'étape E76 les deux clés de session AppSKey, NwkSkey précitées (selon le même processus qu'indiqué ci-dessus à l'étape E65).

## Revendications

1. Procédé mis en oeuvre par un dispositif (10) pour rejoindre un réseau, le dispositif (10) comprenant une mémoire et mémorisant une clé cryptographique applicative (AppKey) dans ladite mémoire,
   le procédé comprenant les étapes suivantes :

   - test (E1 ; E1') de l'absence ou de la présence dans la mémoire d'une clé cryptographique (NwkMKey ; NwkKey) associée au réseau ;
   - en cas d'absence de la clé cryptographique associée au réseau (NwkMKey ; NwkKey), émission (E52) d'une requête (REQ') pour rejoindre le réseau et réception (E72) en retour de données de dérivation (AppNonce) produites par un serveur applicatif (30) et chiffrées au moyen de la clé cryptographique applicative (AppKey) ;
   - en cas de présence de la clé cryptographique associée au réseau (NwkMKey ; NwkKey), émission (E12) d'une requête (REQ) pour rejoindre le réseau et réception (E28) en retour de données de dérivation (NwkNonce) produites par un serveur associé au réseau (20) et chiffrées au moyen d'une clé cryptographique de réseau (NwkKey) égale à, ou dérivée de, la clé cryptographique associée au réseau (NwkMKey ; NwkKey) ;
   - dérivation (E32 ; E76) d'une clé de session applicative (AppSKey) sur la base de la clé cryptographique applicative (AppKey) et des données de dérivation reçues (AppNonce ; NwkNonce).

2. Procédé selon la revendication 1, comprenant, en cas de présence de la clé cryptographique associée au réseau (NwkMKey ; NwkKey), une étape de dérivation (E32) d'une clé de session de réseau (NwkSKey) sur la base de la clé cryptographique de réseau (NwkKey) et des données de dérivation reçues (NwkNonce).

3. Procédé selon l'une des revendications 1 à 2, comprenant, en cas de présence de la clé cryptographique associée au réseau (NwkMKey), une étape de dérivation (E6) de la clé cryptographique de réseau (NwkKey) sur la base de la clé cryptographique associée au réseau (NwkMKey) et d'un identifiant (NetID) du réseau.

4. Procédé selon la revendication 3, comprenant une étape de réception de l'identifiant (NetID) du réseau en provenance du serveur associé au réseau.

5. Procédé selon l'une des revendications 1 à 2, dans lequel la clé cryptographique de réseau est la clé cryptographique associée au réseau (NwkKey).

6. Procédé selon l'une des revendications 1 à 5, dans lequel le dispositif (10) comprend une entité électronique sécurisée (2) incluant ladite mémoire.

7. Procédé mis en oeuvre dans un réseau comprenant un serveur applicatif (30), un serveur de réseau (20) et un dispositif (10) comprenant une mémoire mémorisant une clé cryptographique applicative (AppKey), le procédé comprenant les étapes suivantes :

   - test (E1 ; E1') par le dispositif de l'absence ou de la présence dans la mémoire d'une clé cryptographique (NwkMKey ; NwkKey) associée au réseau ;
   - en cas d'absence de la clé cryptographique associée au réseau (NwkMKey ; NwkKey), émission (E52) par le dispositif (10) d'une requête (REQ') pour rejoindre le réseau, production (E60) de données de dérivation (AppNonce) par le serveur applicatif (30), chiffrement (E64) des données de dérivation (AppNonce) par le serveur applicatif (30) au moyen de la clé cryptographique applicative (AppKey), et réception (E72) par le dispositif (10) des données de dérivation chiffrées ;
   - en cas de présence de la clé cryptographique associée au réseau (NwkMKey ; NwkKey), émission (E12) par le dispositif (10) d'une requête (REQ) pour rejoindre le réseau, production (E16) de données de dérivation (NwkNonce) par le serveur de réseau (20), chiffrement (E20) des données de dérivation (NwkNonce) par le serveur de réseau (20) au moyen d'une clé cryptographique de réseau (NwkKey) égale à, ou dérivée de, la clé cryptographique associée au réseau (NwkMKey; NwkKey), et réception (E28) par le dispositif (10) des données de dérivation chiffrées ;
   - dérivation (E32 ; E76) d'une clé de session applicative (AppSKey) par le dispositif (10) sur la base de la clé cryptographique applicative (AppKey) et des données de dérivation reçues (AppNonce ; NwkNonce).

8. Entité électronique (2) comprenant :

   - une mémoire mémorisant une clé cryptographique applicative (AppKey),
   - un module d'émission d'une requête (REQ ; REQ') pour rejoindre un réseau ;
   - un mécanisme de test de l'absence ou de la présence dans la mémoire d'une clé cryptographique (NwkMKey ; NwkKey) associée au réseau ;
   - un module de réception conçu pour recevoir, en cas d'absence de la clé cryptographique associée au réseau (NwkMKey; NwkKey), et suite à l'émission (E52) d'une requête (REQ') pour rejoindre le réseau, des données de

   dérivation (AppNonce) produites par un serveur applicatif (30) et chiffrées au moyen de la clé cryptographique applicative (AppKey) et, en cas de présence de la clé cryptographique associée au réseau (NwkMKey; NwkKey), et suite à l'émission (E12) d'une requête (REQ) pour rejoindre le réseau, des données de dérivation (NwkNonce) produites par un serveur associé au réseau (20) et chiffrées au moyen d'une clé cryptographique de réseau (NwkKey) égale à, ou dérivée de, la clé cryptographique associée au réseau (NwkMKey ; NwkKey) ;

   - un module de dérivation d'une clé de session applicative (AppSKey) sur la base de la clé cryptographique applicative (AppKey) et des données de dérivation reçues (AppNonce ; NwkNonce).

9. Entité électronique selon la revendication 8, comprenant un module apte à dériver, en cas de présence de la clé cryptographique associée au réseau (NwkMKey ; NwkKey), une clé de session de réseau (NwkSKey) sur la base de la clé cryptographique de réseau (NwkKey) et des données de dérivation reçues (NwkNonce).

**10.** Entité électronique selon l'une des revendications 8 à 9, comprenant un module apte à dériver, en cas de présence de la clé cryptographique associée au réseau (NwkMKey ; NwkKey), la clé cryptographique de réseau (NwkKey) sur la base de la clé cryptographique associée au réseau (NwkMKey) et d'un identifiant (NetID) du réseau.

**Patentansprüche**

**1.** Verfahren, das von einer Vorrichtung (10) umgesetzt wird, um einem Netzwerk beizutreten, wobei die Vorrichtung (10) einen Speicher umfasst und einen kryptografischen Anwendungsschlüssel (AppKey) in dem Speicher speichert, wobei das Verfahren die folgenden Schritte umfasst:

- Testen (E1; E1') des Nichtvorhandenseins oder des Vorhandenseins eines dem Netzwerk zugeordneten kryptografischen Schlüssels (NwkMKey; NwkKey) in dem Speicher;
- im Fall des Nichtvorhandenseins des dem Netzwerk zugeordneten kryptografischen Schlüssels (NwkMKey; NwkKey), Senden (E52) einer Anforderung (REQ'), um dem Netzwerk beizutreten, und Empfangen (E72), im Gegenzug, von Ableitungsdaten (AppNonce), die von einem Anwendungsserver (30) erzeugt werden und mittels des kryptografischen Anwendungsschlüssels (AppKey) verschlüsselt sind;
- im Fall des Vorhandenseins des dem Netzwerk zugeordneten kryptografischen Schlüssels (NwkMKey; Nwk-Key), Senden (E12) einer Anforderung (REQ), um dem Netzwerk beizutreten, und Empfangen (E28), im Gegenzug, von Ableitungsdaten (NwKNonce), die von einem dem Netzwerk zugeordneten Server (20) erzeugt werden und mittels eines kryptografischen Netzwerkschlüssels (NwkKey) verschlüsselt sind, der gleich dem dem Netzwerk zugeordneten kryptografischen Schlüssel (NwkMKey; NwkKey) ist oder von diesem abgeleitet ist;
- Ableiten (E32; E76) eines Anwendungssitzungsschlüssels (AppSKey) auf der Basis des kryptografischen Anwendungsschlüssels (AppKey) und der empfangenen Ableitungsdaten (AppNonce; NwkNonce).

**2.** Verfahren nach Anspruch 1, umfassend, im Fall des Vorhandenseins des dem Netzwerk zugeordneten kryptografischen Schlüssels (NwkMKey; NwkKey), einen Schritt des Ableitens (E32) eines Netzwerksitzungsschlüssels (NwkSKey) auf der Basis des kryptografischen Netzwerkschlüssels (NwkKey) und der empfangenen Ableitungsdaten (NwkNonce).

**3.** Verfahren nach einem der Ansprüche 1 bis 2, umfassend, im Fall des Vorhandenseins des dem Netzwerk zugeordneten kryptografischen Schlüssels (NwkMKey), einen Schritt des Ableitens (E6) des kryptografischen Netzwerkschlüssels (NwkKey) auf der Basis des dem Netzwerk zugeordneten kryptografischen Schlüssels (NwkMKey) und einer Kennung (NetID) des Netzwerks.

**4.** Verfahren nach Anspruch 3, umfassend einen Schritt des Empfangens der Kennung (NetID) des Netzwerks von dem dem Netzwerk zugeordneten Server.

**5.** Verfahren nach einem der Ansprüche 1 bis 2, bei dem der kryptografische Netzwerkschlüssel der dem Netzwerk zugeordnete kryptografische Schlüssel (NwkKey) ist.

**6.** Verfahren nach einem der Ansprüche 1 bis 5, bei dem die Vorrichtung (10) eine gesicherte elektronische Einheit (2) umfasst, die den Speicher beinhaltet.

**7.** Verfahren, das in einem Netzwerk umgesetzt wird, das einen Anwendungsserver (30), einen Netzwerkserver (20) und eine Vorrichtung (10) umfasst, die einen Speicher umfasst, der einen kryptografischen Anwendungsschlüssel (AppKey) speichert,
wobei das Verfahren die folgenden Schritte umfasst:

- Testen (E1; E1') des Nichtvorhandenseins oder des Vorhandenseins eines dem Netzwerk zugeordneten kryptografischen Schlüssels (NwkMKey; NwkKey) in dem Speicher durch die Vorrichtung;
- im Fall des Nichtvorhandenseins des dem Netzwerk zugeordneten kryptografischen Schlüssels (NwkMKey; NwkKey), Senden (E52) einer Anforderung (REQ'), um dem Netzwerk beizutreten, durch die Vorrichtung (10), Erzeugen (E60) von Ableitungsdaten (AppNonce) durch den Anwendungsserver (30), Verschlüsseln (E64) der Ableitungsdaten (AppNonce) durch den Anwendungsserver (30) mittels des kryptografischen Anwendungsschlüssels (AppKey) und Empfangen (E72) (10) der verschlüsselten Ableitungsdaten durch die Vorrichtung;
- im Fall des Vorhandenseins des dem Netzwerk zugeordneten kryptografischen Schlüssels (NwkMKey; Nwk-Key), Senden (E12) einer Anforderung (REQ), um dem Netzwerk beizutreten, durch die Vorrichtung (10), Erzeugen (E16) von Ableitungsdaten (NwkNonce) durch den Netzwerkserver (20), Verschlüsseln (E20) der Ableitungsdaten (NwkNonce) durch den Netzwerkserver (20) mittels eines kryptografischen Netzwerkschlüssels (NwkKey), der gleich dem dem Netzwerk zugeordneten kryptografischen Schlüssel (NwkMKey; NwkKey) ist oder von diesem ableitet ist, und Empfangen (E28) der verschlüsselten Ableitungsdaten durch die Vorrichtung (10) ;

- Ableiten (E32; E76) eines Anwendungssitzungsschlüssels (AppSKey) durch die Vorrichtung (10) auf der Basis des kryptografischen Anwendungsschlüssels (AppKey) und der empfangenen Ableitungsdaten (AppNonce; NwkNonce).

8. Elektronische Einheit (2), umfassend:

- einen Speicher, der einen kryptografischen Anwendungsschlüssel (AppKey) speichert,
- ein Modul zum Senden einer Anforderung (REQ; REQ'), um einem Netzwerk beizutreten;
- einen Mechanismus zum Testen des Nichtvorhandenseins oder des Vorhandenseins eines dem Netzwerk zugeordneten kryptografischen Schlüssels (NwkMKey; NwkKey) in dem Speicher;
- ein Empfangsmodul, das dazu ausgelegt ist, im Fall des Nichtvorhandenseins des dem Netzwerk zugeordneten kryptografischen Schlüssels (NwkMKey; NwkKey) und nach dem Senden (E52) einer Anforderung (REQ'), um dem Netzwerk beizutreten, Ableitungsdaten (AppNonce) zu empfangen, die von einem Anwendungsserver (30) erzeugt werden und mittels des kryptografischen Anwendungsschlüssels (AppKey) verschlüsselt sind, und im Fall des Vorhandenseins des dem Netzwerk zugeordneten kryptografischen Schlüssels (NwkMKey; NwkKey) und nach dem Senden (E12) einer Anforderung (REQ), um dem Netzwerk beizutreten, Ableitungsdaten (NwkNonce) zu empfangen, die von einem dem Netzwerk zugeordneten Server (20) erzeugt werden und mittels eines kryptografischen Schlüssels (NwkKey) verschlüsselt sind, der gleich dem dem Netzwerk zugeordneten kryptografischen Schlüssel (NwkMKey; NwkKey) ist oder von diesem abgeleitet ist;
- ein Modul zum Ableiten eines Anwendungssitzungsschlüssels (AppSKey) auf der Basis des kryptografischen Anwendungsschlüssels (AppKey) und der empfangenen Ableitungsdaten (AppNonce; NwkNonce).

9. Elektronische Einheit nach Anspruch 8, umfassend ein Modul, das geeignet ist, im Fall des Vorhandenseins des dem Netzwerk zugeordneten kryptografischen Schlüssels (NwkMKey; NwkKey) einen Netzwerksitzungsschlüssel (NwkSKey) auf der Basis des kryptografischen Netzwerkschlüssels (NwkKey) und der empfangenen Ableitungsdaten (NwkNonce) abzuleiten.

10. Elektronische Einheit nach einem der Ansprüche 8 bis 9, umfassend ein Modul, das geeignet ist, im Fall des Vorhandenseins des dem Netzwerk zugeordneten kryptografischen Schlüssels (NwkMKey; NwkKey) den kryptografischen Netzwerkschlüssel (NwkKey) auf der Basis des dem Netzwerk zugeordneten kryptografischen Schlüssels (NwkMKey) und einer Kennung (NetID) des Netzwerks abzuleiten.

**Claims**

1. Method, implemented by a device (10), for joining a network, the device (10) comprising a memory and storing an application cryptographic key (AppKey) in said memory, the method comprising the following steps:

- testing (E1; E1') for the absence from or presence in the memory of a cryptographic key (NwkMKey; NwkKey) associated with the network;
- in case of absence of the cryptographic key (NwkMKey; NwkKey) associated with the network, sending (E52) a request (REQ') to join the network and receiving (E72) in return derivation data (AppNonce) produced by an application server (30) and encrypted by means of the application cryptographic key (AppKey);
- in case of presence of the cryptographic key (NwkMKey; NwkKey) associated with the network, sending (E12) a request (REQ) to join the network and receiving (E28) in return derivation data (NwkNonce) produced by a server (20) associated with the network and encrypted by means of a network cryptographic key (NwkKey) equal to, or derived from, the cryptographic key (NwkMKey; NwkKey) associated with the network;
- deriving (E32; E76) an application session key (AppSKey) on the basis of the application cryptographic key (AppKey) and of the received derivation data (AppNonce; NwkNonce).

2. Method according to Claim 1, comprising, in case of presence of the cryptographic key (NwkMKey; NwkKey) associated with the network, a step (E32) of deriving a network session key (NwkSKey) on the basis of the network cryptographic key (NwkKey) and of the received derivation data (NwkNonce).

3. Method according to one of Claims 1 to 2, comprising, in case of presence of the cryptographic key (NwkMKey) associated with the network, a step (E6) of deriving a network cryptographic key (NwkKey) on the basis of the cryptographic key (NwkMKey) associated with the network and of an identifier (NetID) of the network.

4. Method according to Claim 3, comprising a step of receiving the identifier (NetID) of the network from the server associated with the network.

5. Method according to one of Claims 1 to 2, wherein the network cryptographic key is the cryptographic key (NwkKey) associated with the network.

6. Method according to one of Claims 1 to 5, wherein the device (10) comprises a secure electronic entity (2) including said memory.

7. Method implemented in a network comprising an application server (30), a network server (20) and a device (10) comprising a memory storing an application cryptographic key (AppKey), the method comprising the following steps:

- testing (E1; E1'), by means of the device, for the absence from or presence in the memory of a cryptographic key (NwkMKey; NwkKey) associated with the network;
- in case of absence of the cryptographic key (NwkMKey; NwkKey) associated with the network, sending (E52), by means of the device (10), a request (REQ') to join the network, producing (E60) derivation data (AppNonce) by means of the application server (30), encrypting (E64) the derivation data (AppNonce) by means of the application server (30) and of the application cryptographic key (AppKey), and receiving (E72), by means of the device (10), encrypted derivation data;
- in case of presence of the cryptographic key (NwkMKey; NwkKey) associated with the network, sending (E12), by means of the device (10), a request (REQ) to join the network, producing (E16) derivation data (NwkNonce) by means of the network server (20), encrypting (E20) the derivation data (NwkNonce) by means of the network server (20) and of a network cryptographic key (NwkKey) equal to, or derived from, the cryptographic key (NwkMKey; NwkKey) associated with the network, and receiving (E28), by means of the device (10), encrypted derivation data;
- deriving (E32; E76) an application session key (AppSKey), by means of the device (10), on the basis of the application cryptographic key (AppKey) and of the received derivation data (AppNonce; NwkNonce).

8. Electronic entity (2) comprising:

- a memory storing an application cryptographic key (AppKey);
- a module for sending a request (REQ; REQ') to join a network;
- a mechanism for testing for the absence from or presence in the memory of a cryptographic key (NwkMKey; NwkKey) associated with the network;
- a receiving module designed to receive, in case of absence of the cryptographic key (NwkMKey; NwkKey) associated with the network, and after a request (REQ') to join the network has been sent (E52), derivation data (AppNonce) produced by an application server (30) and encrypted by means of the application cryptographic key (AppKey) and, in case of presence of the cryptographic key (NwkMKey; NwkKey) associated with the network, and after a request (REQ) to join the network has been sent (E12), derivation data (NwkNonce) produced by a server (20) associated with the network and encrypted by means of a network cryptographic key (NwkKey) equal to, or derived from, the cryptographic key (NwkMKey; NwkKey) associated with the network;
- a module for deriving an application session key (AppSKey) on the basis of the application cryptographic key (AppKey) and of the received derivation data (AppNonce; NwkNonce).

9. Electronic entity according to Claim 8, comprising a module able to derive, in case of presence of the cryptographic key (NwkMKey; NwkKey) associated with the network, a network session key (NwkSKey) on the basis of the network cryptographic key (NwkKey) and of the received derivation data (NwkNonce).

10. Electronic entity according to one of Claims 8 to 9, comprising a module able to derive, in case of presence of the cryptographic key (NwkMKey; NwkKey) associated with the network, the network cryptographic key (NwkKey) on the basis of the cryptographic key (NwkMKey) associated with the network and of an identifier (NetID) of the network.

## Fig.1

10

2

12 — 14 )))

5

20

I

30

## Fig.2

10

| DevEUI<br>AppEUI<br>AppKey<br>(NwkKey/NwkMKey) |

20

| NetID<br>NwkDevKey/<br>NwkKey |

30

| AppEUI<br>AppDevKey/<br>AppKey |

## Fig.3

E0

↓

N ← E1 → P

E50         E2

## Fig.4

E0'

↓

N ← E1' → P

E50         E8

Fig.5

Fig.6